# EUROPEAN PATENT APPLICATION

(11) **EP 3 629 105 A1**
(43) Date of publication of application: **01.04.2020**
(21) Application number: 18197073.2
(22) Date of filing: 27.09.2018
(51) Int. Cl.: G05B 13/02

(54) **HIGH-LEVEL DECISION MAKING FOR SAFE AND REASONABLE AUTONOMOUS LANE CHANGING USING REINFORCEMENT LEARNING**

(71) Applicant: Bayerische Motoren Werke Aktiengesellschaft, 80809 München (DE)
(72) Inventor: Mirchevska, Branka, 81543 München (DE); Pek, Christian, 85716 Unterschleißheim (DE); Dr. Werling, Moritz, 80809 München (DE)

(57) **Abstract**

An aspect of the invention describes a system for training an artificial intelligence unit for an automated vehicle, with said artificial intelligence unit comprising a knowledge configuration, with said artificial intelligence unit determining or reading out an evaluation value for at least two motion actions for the automated vehicle considering an input state and considering the knowledge configuration, said input state characterizing the automated vehicle and/or its environment, said system configured to determine for each of the at least two motions actions whether the respective motion action is to be filtered out considering the input state; select one motion action from the set of motion actions, which are not to be filtered out of the at least two motion actions, considering the evaluation value of the respective motion actions; and train the artificial intelligence unit by adapting the knowledge configuration of the artificial intelligence unit considering the selected motion action.

## Description

This invention relates to a system and a method for training an artificial intelligence unit for an automated vehicle.

An automated vehicle is a vehicle with automated longitudinal guidance and/or automated lateral guidance. The term "automated vehicle" also comprises an autonomous vehicle. The term "automated vehicle" comprises in particular a vehicle with an arbitrary level of automation, for example the levels of automation that are defined in the standard SAE J3016 (SAE - Society of Automotive Engineering):
Level 0: Automated system issues warnings and may momentarily intervene but has no sustained vehicle control.
Level 1 ("hands on"): The driver and the automated system share control of the vehicle. Examples are Adaptive Cruise Control (ACC), where the driver controls steering and the automated system controls speed; and Parking Assistance, where steering is automated while speed is under manual control. The driver must be ready to retake full control at any time. Lane Keeping Assistance (LKA) Type II is a further example of level 1 self-driving.
Level 2 ("hands off"): The automated system takes full control of the vehicle (accelerating, braking, and steering). The driver must monitor the driving and be prepared to intervene immediately at any time if the automated system fails to respond properly. The shorthand "hands off" is not meant to be taken literally. In fact, contact between hand and wheel is often mandatory during SAE 2 driving, to confirm that the driver is ready to intervene.
Level 3 ("eyes off"): The driver can safely turn their attention away from the driving tasks, e.g. the driver can text or watch a movie. The vehicle will handle situations that call for an immediate response, like emergency braking. The driver must still be prepared to intervene within some limited time, specified by the manufacturer, when called upon by the vehicle to do so.
Level 4 ("mind off"): As level 3, but no driver attention is ever required for safety, i.e. the driver may safely go to sleep or leave the driver's seat. Self-driving is supported only in limited spatial areas (geofenced) or under special circumstances, like traffic jams. Outside of these areas or circumstances, the vehicle must be able to safely abort the trip, i.e. park the car, if the driver does not retake control.
Level 5 ("steering wheel optional"): No human intervention is required at all. An example would be a robotic taxi.

Apart from automated vehicles, it is known that training of an artificial intelligence unit may take up a considerable amount of time. In particular, training of an artificial intelligence unit takes up a considerable amount of time, when the artificial intelligence unit has to learn various independent skills, like driving a vehicle safe and driving a vehicle under consideration of driving comfort.

Therefore, the purpose of the invention is to speed up the training of an artificial intelligence unit for an automated vehicle.

One aspect of the invention describes a system for training an artificial intelligence unit for an automated vehicle.

One example for the artificial intelligence unit is a reinforcement learning unit.

Basic reinforcement is modeled as a Markov decision process:
- a set of environment and agent states;
- a set of actions, of the agent;
- probabilities of transition from one state to another state,
- a reward after transition from one state to another by a specific action, and
- rules that describe what the agent observes.

Rules are often stochastic. The observation typically involves the scalar, immediate reward associated with the last transition. In many works, the agent is assumed to observe the current environmental state (full observability). If not, the agent has partial observability. Sometimes the set of actions available to the agent is restricted (a zero balance cannot be reduced).

A reinforcement learning agent interacts with its environment in discrete time steps. At each time step, the agent receives an observation, which typically includes the reward. It then chooses an action from the set of available actions, which is subsequently sent to the environment. The environment moves to a new state and the reward associated with the transition is determined. The goal of a reinforcement learning agent is to collect as much reward as possible. The agent can (possibly randomly) choose any action as a function of the history.

Another example for the artificial intelligence unit is a Q-learning unit.

Q-learning is a reinforcement learning technique. The goal of Q-Learning is to learn a policy, which tells an agent what action to take under what circumstances. It does not require a model of the environment and can handle problems with stochastic transitions and rewards, without requiring adaptations.

For any finite Markov decision process, Q-learning finds a policy that is optimal in the sense that it maximizes the expected value of the total reward over all successive steps, starting from the current state. Q-learning can identify an optimal action-selection policy for any given finite Markov decision process, given infinite exploration time and a partly-random policy. "Q" names the function that returns the reward used to provide the reinforcement and can be said to stand for the "quality" of an action taken in a given state.

Another example for the artificial intelligence unit is a Deep Q-learning unit.

Deep Q-learning uses a deep convolutional neural network, with layers of tiled convolutional filters to mimic the effects of receptive fields, wherein convolutional neural networks are a class of feed-forward artificial neural networks. Reinforcement learning is unstable or divergent when a nonlinear function approximator such as a neural network is used to represent Q. This instability comes from the correlations present in the sequence of observations, the fact that small updates to Q may significantly change the policy and the data distribution, and the correlations between Q and the target values.

Said artificial neural networks are computing systems vaguely inspired by the biological neural networks that constitute animal brains. Such systems "learn" to perform tasks by considering examples, generally without being programmed with any task-specific rules. For example, in image recognition, they might learn to identify images that contain cats by analyzing example images that have been manually labeled as "cat" or "no cat" and using the results to identify cats in other images. They do this without any prior knowledge about cats, e.g., that they have fur, tails, whiskers and cat-like faces. Instead, they automatically generate identifying characteristics from the learning material that they process.

An artificial neural network is based on a collection of connected units or nodes called artificial neurons which loosely model the neurons in a biological brain. Each connection, like the synapses in a biological brain, can transmit a signal from one artificial neuron to another. An artificial neuron that receives a signal can process it and then signal additional artificial neurons connected to it.

In common artificial neural network implementations, the signal at a connection between artificial neurons is a real number, and the output of each artificial neuron is computed by some non-linear function of the sum of its inputs. The connections between artificial neurons are called "synapses". Artificial neurons and synapses typically have a weight that adjusts as learning proceeds. The weight increases or decreases the strength of the signal at a connection. Artificial neurons may have a threshold such that the signal is only sent if the aggregate signal crosses that threshold. Typically, artificial neurons are aggregated into layers. Different layers may perform different kinds of transformations on their inputs. Signals travel from the first layer (the input layer), to the last layer (the output layer), possibly after traversing the layers multiple times.

The original goal of the artificial neural network approach was to solve problems in the same way that a human brain would. However, over time, attention moved to performing specific tasks, leading to deviations from biology. Artificial neural networks have been used on a variety of tasks, including computer vision, speech recognition, machine translation, social network filtering, playing board and video games and medical diagnosis.

Said artificial intelligence unit comprises a knowledge configuration, for example a Q-table (if said artificial intelligence unit is a Q-learning unit) or synaptic weights (if said artificial intelligence unit is a Deep Q-learning unit).

Said artificial intelligence unit determines or reads out an evaluation value for at least two motion actions for the automated vehicle considering an input state and considering the knowledge configuration, said input state characterizing the automated vehicle and/or its environment.

The at least two motion actions are in particular motion actions regarding longitudinal and/or lateral motion of the automated vehicle, for example acceleration, deceleration, turn left, turn right, switch lane to the left, stay in lane, or switch lane to the right.

Moreover, said system is configured to determine for each of the at least two motions actions whether the respective motion action is to be filtered out considering the input state, and to select one motion action from the set of motion actions, which are not to be filtered out of the at least two motion actions, considering the evaluation value of the respective motion actions.

Said system is for example configured to select one motion action from the set of motions actions, which are not to be filtered out, by selecting the motion action providing the highest reward.

Moreover, said system is configured to train the artificial intelligence unit by adapting the knowledge configuration of the artificial intelligence unit considering the selected motion action.

In particular, the automated vehicle or a driving system/driver assistance system of the automated vehicle may also execute the selected motion. The execution of the selected motion may be performed in the physical world or in a virtual simulation environment.

By adapting the knowledge configuration of the artificial intelligence unit considering only those motions actions that are not to be filtered out, it is possible to focus the training of the artificial intelligence unit to a specific skill.

An advantage of the invention is that it allows the combination of the self-adaption capabilities of artificial intelligence with the determinism of formal methods. Despite the difficulty of proving properties of artificial intelligence in general, the invention makes it possible to prove properties of the state space, in which the artificial intelligence unit is working. The filtering out of motion actions on a case-by-case basis allows to flexibly adapt this state space, so that the approach does not restrict the availability of the artificial intelligence unit too much, which makes the invention feasible for use in practice.
In a preferred embodiment of the invention, said system is configured to determine for each of the at least two motion action whether the respective motion action is to be filtered out by determining whether the automated vehicle is in a safe state after execution of the respective motion action, wherein a safe state is a state of the automated vehicle.

The state of the automated vehicle comprises in particular at least the spatial position of the automated vehicle, the orientation of the automated vehicle and/or the dynamics of the automated vehicle, with the dynamics of the automated vehicle comprising at least the velocity of the automated vehicle, the acceleration of the automated vehicle and/or the deceleration of the automated vehicle.

The state of the automated vehicle is in particular collision free with respect to at least one obstacle at one specific point in time, if the automated vehicle does not collide with the at least one obstacle at that point in time.

However, being in a collision-free state at a first point in time does not mean that the automated vehicle will also be in a collision-free state at a second point in time, which is succeeding the first point in time. Therefore not every collision-free state of the automated vehicle is also a safe state.

A safe state of the automated vehicle is in particular a state of the automated vehicle at a first point in time in which the vehicle can be brought into another safe state of the vehicle at a second point in time without colliding with obstacles, wherein the second point in time is later than the first point in time.

An automated vehicle that is standing still is in particular assumed to be in a safe state. According to the definition of a safe state of the automated vehicle that was given before, every state of the automated vehicle, from with the automated vehicle can be brought into standstill without colliding with obstacles, is in particular also a safe state.

When the safety of a state is assessed in practice, in particular the range of motion of obstacles and/or traffic rules can be considered. For example, if an obstacle is a car, then the range of motion of the car is limited by the acceleration potential of the engine of the car, by the deceleration potential of the brakes of the car, and/or by the steering stops of the steering axle of the car.

It may be difficult to determine the range of motion of an obstacle in practice, however it is possible to estimate a "worst case" range of motion of the obstacle by analyzing the type of the obstacle. It is for example possible to determine an upper bound for the velocity, with which a pedestrian, a cyclist or a car can move. Analogous bounds can for example be derived for acceleration, deceleration or tractability.

By adapting the knowledge configuration of the artificial intelligence unit considering only those motions actions that are not to be filtered out for safety reasons, it is possible to focus the training of the artificial intelligence unit to non-safety relevant skills, like driving a vehicle under consideration of driving comfort.

As the selected motion action is in particular not only used for training the artificial intelligence unit but as it may also be executed, the skill of safe driving is not required to be learned by the artificial intelligence unit, as also during actual driving unsafe motion actions for the automated vehicle may be filtered out.

An advantage of the invention is that it speeds up the training of the artificial intelligence unit and guarantees that the automated vehicle stays in safe states. Training the artificial intelligence unit with a conventional training approach would typically take more time and proving that the automated vehicle stays in a safe state is virtually impossible using a conventional training approach.

In another preferred embodiment of the invention, said system is configured to determine for each of the at least two motions actions whether the respective motion action is to be filtered out by considering a training goal for said system. A training goal for said system is in particular a sub-task of the overall driving task. For example, compliance with traffic rules can be hidden from said system, by filtering out all of the at least two motion actions, which do not comply with the applicable traffic rules. In this example, said system focuses on learning how to drive within the framework of applicable traffic rules, without having to learn the traffic rules themselves.

In another preferred embodiment of the invention, said system is configured to determine for each of the at least two motion actions whether the respective motion action is to be filtered out by considering a mode of operation in which the automated vehicle is operated, in particular an automation level, which is defined in the standard SAE J3016.

In particular a motion action may be to be filtered out, when the automated vehicle is operated in another automation level than the automation level for which the respective motion action was developed. For example, when the automated vehicle is operated in automation level 3 and the respective motion action was developed for automation level 4, then the respective motion action is to be filtered out.

In another preferred embodiment of the invention, said system is configured to execute a safety motion action, if all of the at least two motion actions are filtered out.

Said safety motion action is for example a least hazardous motion action, which minimizes the impact of a possible collision.

In another preferred embodiment of the invention, the artificial intelligence unit is a neural network. Said neural network comprises a plurality of neurons interconnected via a plurality of synapses.

A first set of neurons is receiving information about the input state, and a second set of neurons is approximating at least two evaluation functions considering the input state, and a third set of neurons is assigning the at least two evaluation functions to the at least two motion actions of the automated vehicle.

The approximation of the at least two evaluation functions is in particular based on the structure of the neural network, wherein the structure of the neural network defines which neurons are connected by the synapses. Additionally, the approximation of the at least two evaluation functions is in particular based on the synaptic weights, which define the influence of a first neuron on a second neuron.

The knowledge configuration of the neural network as the artificial intelligence unit is the synaptic weight of the at least one synapse of the second set of synapses.

Therefore, in this embodiment of the invention, the system for training the artificial intelligence unit is a system for training the neural network for the automated vehicle.

Said neural network comprises synaptic weights of the at least one synapse of the second set of synapses. Said neural network determines an evaluation value for at least two motion actions for the automated vehicle considering an input state and considering the synaptic weights of the at least one synapse of the second set of synapses. Said input state characterizes the automated vehicle and/or its environment.

Said system is configured to determine for each of the at least two motions actions whether the respective motion action is to be filtered out considering the input state.

Moreover, said system is configured to select one motion action from the set of motion actions, which are not to be filtered out of the at least two motion actions, considering the evaluation value of the respective motion actions.

Additionally, said system is configured to train the neural network by adapting the synaptic weights of the at least one synapse of the second set of synapses of the neural network considering the selected motion action.

In particular, the synaptic weight of at least one synapse of the second set of synapses is adapted based on a motion action that is not to be filtered out, whereas a synaptic weight of no synapse of the second set of synapses is adapted based on a motion action that is to be filtered out.

In another preferred embodiment of the invention, the evaluation value of the at least two motion actions considers a deviation of an actual speed of the automated vehicle from a target speed of the automated vehicle.

In particular when the motion actions are lane changes of the automated vehicle, a deviation of the actual speed of the automated vehicle from the target speed of the automated vehicle may be a reason for performing lane changes at all.

A second aspect of the invention describes a method, in particular a computer implemented method for training an artificial intelligence unit for an automated vehicle, with said artificial intelligence unit comprising a knowledge configuration, with said artificial intelligence unit determining or reading out an evaluation value for at least two motion actions for the automated vehicle considering an input state and considering the knowledge configuration, said input state characterizing the automated vehicle and/or its environment.

The method comprises the step of determining for each of the at least two motions actions whether the respective motion action is to be filtered out considering the input state.

Moreover, the method comprises the stop of selecting one motion action from the set of motion actions, which are not to be filtered out, of the at least two motion actions, considering the evaluation value of the respective motion actions.

Additionally, the method comprises the step of training the artificial intelligence unit by adapting the knowledge configuration of the artificial intelligence unit considering the selected motion action.

For a better understanding of the present invention, and to show how the same may be carried into effect, reference will now be made, by way of example, to the accompanying drawing, in which:
- Fig. 1: shows an exemplified traffic situation,
- Fig. 2: shows the basic principle of reinforcement learning,
- Fig. 3: shows an exemplified structure of the system for training the artificial intelligence unit, and
- Fig. 4: shows an example for the knowledge configuration of the artificial intelligence unit.

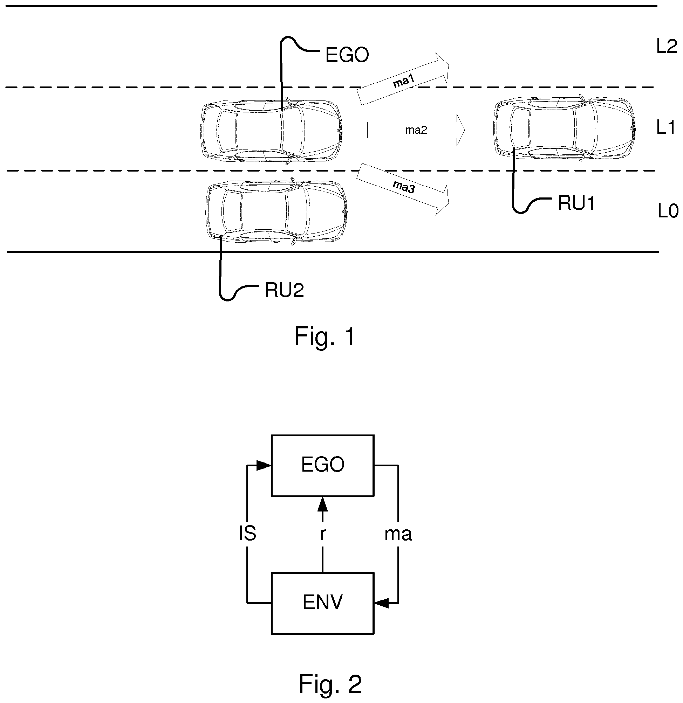

Fig. 1 show an exemplified traffic situation on a road that comprises three lanes L0, L1, L2. The automated vehicle EGO is driving on the middle lane L1, one road user RU1 is also driving on the middle lane L1 but in front of the automated vehicle EGO, and another road user RU2 is driving on the right lane L0.

The automated vehicle EGO has three motion actions ma1, ma2, ma3 available, wherein one motion action ma1 is a lane change to the left lane L2, one motion action ma2 is staying in the current lane L1 and one motion action ma3 is a lane change to the right lane L0.

As the road user RU2 is driving alongside the automated vehicle EGO on the right lane L0, the motion action a3, which is a lane change to the right lane L0, would not be safe, as the automated vehicle would collide with the road user RU2.

However, it would be possible for the automated vehicle EGO, to perform motion action ma1, which is a lane change to the left lane L2, to overtake the road user RU1.

Fig. 2 shows the basic principle of reinforcement learning. The automated vehicle EGO is selecting and executing a motion action ma, which influences the environment ENV of the automated vehicle. The automated vehicle EGO receives an input state IS characterizing the automated vehicle EGO and/or its environment ENV and a reward r for the transition from one state to another state.

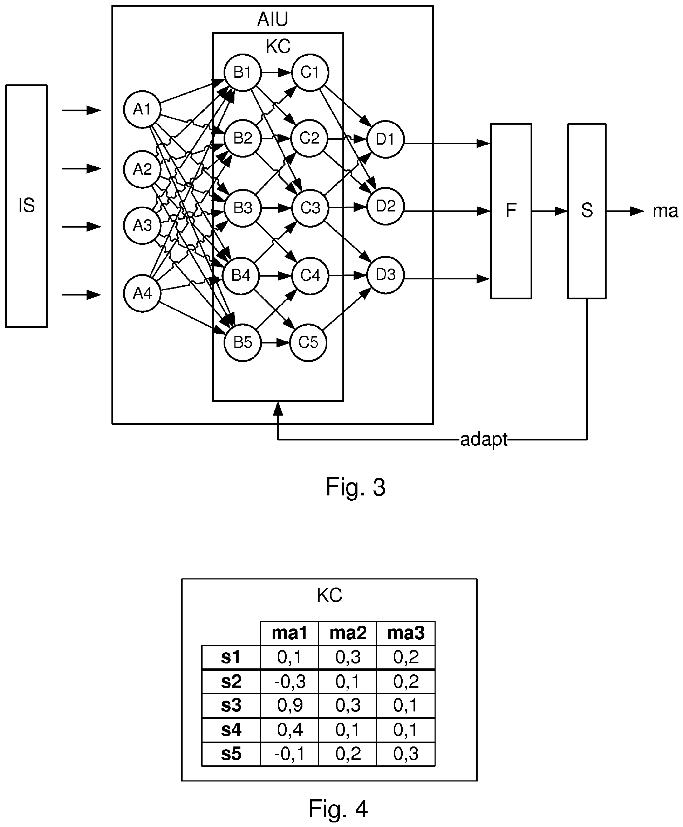

Fig. 3 shows an exemplified structure of the system for training the artificial intelligence unit AIU for an automated vehicle EGO.

Said artificial intelligence unit AIU comprises a knowledge configuration KC, and said artificial intelligence unit AIU determines or reads out an evaluation value for at least two motion actions ma1, ma2, ma3 for the automated vehicle EGO considering an input state IS, s1 - s5 and considering the knowledge configuration KC, wherein said input state IS, s1 - s5 characterizes the automated vehicle EGO and/or its environment ENV.

Said system is configured to determine for each of the at least two motions actions ma1, ma2, ma3 whether the respective motion action ma1, ma2, ma3 is to be filtered out considering the input state IS, s1 - s5.

Said system comprises for example a filter unit F for filtering out motion actions.

In particular, said system is configured to determine for each of the at least two motion actions ma1, ma2, ma3 whether the respective motion action ma1, ma2, ma3 is to be filtered out by determining whether the automated vehicle EGO is in a safe state after execution of the respective motion action ma1, ma2, ma3.

Alternatively, said system is in particular configured to determine for each of the at least two motion actions ma1, ma2, ma3 whether the respective motion action ma1, ma2, ma3 is to be filtered out by considering a mode of operation in which the automated vehicle EGO is operated, in particular an automation level.

Moreover, said system is configured to select one motion action ma from the set of motion actions, which are not to be filtered out of the at least two motion actions ma1, ma2, ma3, considering the evaluation value of the respective motion actions ma1, ma2, ma3.

Said system comprises for example a selection unit S for selecting one motion action ma from the set of motion actions, which are not to be filtered out of the at least two motion actions ma1, ma2, ma3, considering the evaluation value of the respective motion actions ma1, ma2, ma3.

Additionally, said system is configured to train the artificial intelligence unit AIU by adapting the knowledge configuration KC of the artificial intelligence unit AIU considering the selected motion action ma.

In case that all of he at least two motion actions ma1, ma2, ma3 are filtered out, said system is configured to execute a safety motion action

In particular, the artificial intelligence unit AIU is a neural network. Said neural network AIU comprises a plurality of neurons A1 - A4; B1 - B5; C1 - C5; D1 - D3 interconnected via a plurality of synapses. A first set of neurons A1 - A4 is receiving information about the input state IS, s1 - s5, and a second set of neurons B1 - B5; C1 - C5 is approximating at least two evaluation functions considering the input state IS, s1 - s5. A third set of neurons D1 - D3 is assigning the at least two evaluation functions to the at least two motion actions ma1, ma2, ma3 of the automated vehicle.

The knowledge configuration KC of the artificial intelligence unit AIU is the synaptic weight of the at least one synapse of the second set of synapses.

The synaptic weight of at least one synapse of the second set of synapses is adapted based on a motion action that is not to be filtered out, and a synaptic weight of no synapse of the second set of synapses is adapted based on a motion action that is to be filtered out.

Fig. 4 shows an example for the knowledge configuration KC of the artificial intelligence unit AIU.

In this example, for each of the input states IS, s1 - s5, a reward r for every motion action ma1, ma2, ma3 for the automated vehicle EGO is defined in the knowledge configuration KC, which is represented as a table.

Said artificial intelligence unit AIU reads out the reward r as an evaluation value for at least two motion actions ma1, ma2, ma3 for the automated vehicle EGO considering the input state IS, s1 - s5 from the knowledge configuration KC. Said input state IS, s1 - s5 characterizes the automated vehicle EGO and/or its environment ENV.

Said system is configured to determine for each of the at least two motions actions ma1, ma2, ma3 whether the respective motion action ma1, ma2, ma3 is to be filtered out considering the input state IS, s1 - s5, in particular a current input state s2.

In other words, said system is configured to determine, which of the at least two motions actions ma1, ma2, ma3 is not allowed to be executed considering the current input state s2.

Moreover, said system is configured to select one motion action ma from the set of motion actions, which are not to be filtered out of the at least two motion actions ma1, ma2, ma3, considering the evaluation value of the respective motion actions ma1, ma2, ma3. For example, the motion action ma with the highest reward r may be selected. In this example, the selected motion action ma is motion action ma3, because is has the highest reward r of the at least two motion actions ma1, ma2, ma3 considering the current input state s2.

Additionally, said system is configured to train the artificial intelligence unit AIU by adapting the knowledge configuration KC of the artificial intelligence unit AIU considering the selected motion action ma.

In particular, the adaption of the knowledge configuration KC of the artificial intelligence unit AIU considering the selected motion action ma may be performed by determination of the following input state IS, s1 - s5, in particular the following input state s4. The reward r for the selected motion action ma, ma3 and the current input state s2 may be adapted, for example, by considering the reward r of the one motion action of the at least two motion actions ma1, ma2, ma3, which has the highest reward regarding the following input state s4. In this example, the motion action ma1 has the highest reward r of the at least two motion actions ma1, ma2, ma3 considering the following input state s4.

For example, the reward r for the selected motion action ma, ma3 and the current input state s2 may be set to a weighted sum of the old value of the reward r for the selected motion action ma, ma3 and the of the reward r for the motion action ma1 with the highest reward r of the at least two motion actions ma1, ma2, ma3 considering the following input state s4. The weights of the weighted sum specifies a learning rate or step size, which determines to what extent newly acquired information overrides old information. A factor of 0 makes the artificial intelligence unit AIU learn nothing (exclusively exploiting prior knowledge), while a factor of 1 makes the artificial intelligence unit AIU consider only the most recent information (ignoring prior knowledge to explore possibilities).

## Claims

1. A system for training an artificial intelligence unit (AIU) for an automated vehicle (EGO), with said artificial intelligence unit (AIU) comprising a knowledge configuration (KC), with said artificial intelligence unit (AIU) determining or reading out an evaluation value for at least two motion actions (ma1, ma2, ma3) for the automated vehicle (EGO) considering an input state (IS, s1 - s5) and considering the knowledge configuration (KC), said input state (IS, s1 - s5) characterizing the automated vehicle (EGO) and/or its environment (ENV), said system configured to:
• determine for each of the at least two motions actions (ma1, ma2, ma3) whether the respective motion action (ma1, ma2, ma3) is to be filtered out considering the input state (IS, s1 - s5);
• select one motion action (ma) from the set of motion actions, which are not to be filtered out of the at least two motion actions (ma1, ma2, ma3), considering the evaluation value of the respective motion actions (ma1, ma2, ma3), and
• train the artificial intelligence unit (AIU) by adapting the knowledge configuration (KC) of the artificial intelligence unit (AIU) considering the selected motion action (ma).

2. A system according to claim 1, said system configured to determine for each of the at least two motion actions (ma1, ma2, ma3) whether the respective motion action (ma1, ma2, ma3) is to be filtered out by determining whether the automated vehicle (EGO) is in a safe state after execution of the respective motion action (ma1, ma2, ma3).

3. A system according to claim 1, said system configured to determine for each of the at least two motion actions (ma1, ma2, ma3) whether the respective motion action (ma1, ma2, ma3) is to be filtered out by considering a mode of operation in which the automated vehicle (EGO) is operated, in particular an automation level.

4. A system according to any of the previous claims, said system configured to execute a safety motion action, if all of the at least two motion actions (ma1, ma2, ma3) are filtered out.

5. A system according to any of the previous claims, wherein
• the artificial intelligence unit (AIU) is a neural network,
• said neural network (AIU) comprising a plurality of neurons (A1 - A4; B1 - B5; C1 - C5; D1 - D3) interconnected via a plurality of synapses, wherein a first set of neurons (A1 - A4) is receiving information about the input state (IS, s1 - s5), and wherein a second set of neurons (B1 - B5; C1 - C5) is approximating at least two evaluation functions considering the input state (IS, s1 - s5), and wherein a third set of neurons (D1 - D3) is assigning the at least two evaluation functions to the at least two motion actions (ma1, ma2, ma3) of the automated vehicle, and
• the knowledge configuration (KC) of the artificial intelligence unit (AIU) is the synaptic weight of the at least one synapse of the second set of synapses.

6. A system according to claim 5, wherein the synaptic weight of at least one synapse of the second set of synapses is adapted based on a motion action that is not to be filtered out.

7. A system according to claim 5 or 6, wherein a synaptic weight of no synapse of the second set of synapses is adapted based on a motion action that is to be filtered out.

8. A system according to any of the previous claims, with the evaluation value of the at least two motion actions (ma1, ma2, ma3) considering a deviation of an actual speed of the automated vehicle (EGO) from a target speed of the automated vehicle.

9. A method for training an artificial intelligence unit (AIU) for an automated vehicle (EGO), with said artificial intelligence unit (AIU) comprising a knowledge configuration (KC), with said artificial intelligence unit (AIU) determining or reading out an evaluation value for at least two motion actions (ma1, ma2, ma3) for the automated vehicle (EGO) considering an input state (IS, s1 - s5) and considering the knowledge configuration (KC), said input state (IS, s1 - s5) characterizing the automated vehicle (EGO) and/or its environment, the method comprising the steps of:
• determining for each of the at least two motions actions (ma1, ma2, ma3) whether the respective motion action (ma1, ma2, ma3) is to be filtered out considering the input state (IS, s1 - s5);
• selecting one motion action (ma) from the set of motion actions, which are not to be filtered out, of the at least two motion actions (ma1, ma2, ma3), considering the evaluation value of the respective motion actions (ma1, ma2, ma3), and
• training the artificial intelligence unit (AIU) by adapting the knowledge configuration (KC) of the artificial intelligence unit (AIU) considering the selected motion action (ma).
